# EUROPÄISCHE PATENTANMELDUNG

(11) **EP 1 097 845 A2**
(43) Veröffentlichungstag der Anmeldung: **09.05.2001**
(21) Anmeldenummer: 00123822.9
(22) Anmeldetag: 02.11.2000
(51) Int. Cl.: B60R 1/072

(54) **Aussenrückspiegel mit Positionssensor**

(30) Priorität: 02.11.1999 DE 19952812
(71) Anmelder: Donnelly Hohe GmbH & Co. KG, 97903 Collenberg (DE)
(72) Erfinder: Fuchs, Hans-Joachim, Holland, MI 49424 (US); Fürst, Peter, 63927 Bürgstadt (DE); Schnellbach, Klaus, 97896 Freudenberg (DE)
(74) Vertreter: Tappe, Hartmut

(57) **Zusammenfassung**

Die Erfindung betrifft einen Außenrückspiegel für ein Kraftfahrzeug mit einer verstellbar gelagerten Glasbaugruppe und einem elektrischen Verstellantrieb zur fernsteuerbaren Verstellung der Glasbaugruppe, wobei die Position der Glasbaugruppe, insbesondere die Winkelstellung, mit zumindest einem Sensor bestimmbar ist. Um eine berührunglose und verschleißfreie Erfassung der Position der Glasbaugruppe zu ermöglichen ist der Sensor in der Art eines Magnetsensors (15, 16) ausgebildet, der mit einem im Außenrückspiegel (1) vorgesehenen Magnetelement (11, 12) in der Art zusammenwirkt, daß der Magnetsensor (15, 16) oder das Magnetelement (11, 12) an der Verstellbewegung der Glasbaugruppe teilnimmt und der Magnetsensor (15, 16) in Abhängigkeit von der Position des Magnetelements (11, 12) ein veränderliches Ausgangssignal liefert, aus dem in einer Auswerteeinheit die Position der Glasbaugruppe ableitbar ist.

## Beschreibung

Die Erfindung betrifft einen Außenrückspiegel für Kraftfahrzeuge nach dem Oberbegriff des Anspruchs 1.

Gattungsgemäße Außenrückspiegel sind aus dem Stand der Technik bekannt. Derartige Außenrückspiegel weisen einen Verstellantrieb auf, mit dem das Spiegelglas, das an der Glasbaugruppe vorgesehen ist, eingestellt werden kann. Dadurch wird es dem Fahrer ermöglicht, die Glasbaugruppe des Außenrückspiegels auf seine individuellen Bedürfnisse ferngesteuert anzupassen. Höherklassige Fahrzeuge weisen dabei eine sogenannte Memory-Funktion auf. Für diese Memory-Funktion werden bestimmte Einstellungen, beispielsweise des Fahrersitzes und insbesondere auch der Außenrückspiegel, gespeichert, so daß nach einem Fahrerwechsel lediglich die Memory-Funktion ausgelöst werden muß, um den Sitz bzw. die Außenrückspiegel in die für den Fahrer richtige Einstellung zu bringen. Für derartige Funktionen ist es erforderlich, die Position der Glasbaugruppe mittels eines Sensors erfassen zu können, um die verschiedenen Einstellwerte für die verschiedenen Fahrer nach dem ersten Anfahren speichern und beim späteren Auslösen der Memory-Funktion anfahren zu können.

Aus dem Stand der Technik sind sogenannte Memory-Potentiometer bekannt, die als Sensoren zur Bestimmung der Position der Glasbaugruppe in Außenrückspiegeln eingebaut werden. Je nach Position der Glasbaugruppe ergeben sich entsprechende Spannungsausgangswerte an dem Memory-Potentiometer, die einer Winkelstellung zugeordnet ist. Dazu werden die, beispielsweise in den Glasverstellantrieben eingebauten, Potentiometer mit einer Eingangsspannung von beispielsweise 5V DC versorgt. Abhängig von der Stellung der Glasbaugruppe kann dann an den Memory-Potentiometern eine Ausgangsspannung zwischen 5 % und 95 % der angelegten Eingangsspannung abgenommen werden. Aus dem Spannungsabfall zwischen Eingangsspannung und Ausgangsspannung kann somit die Stellung der Glasbaugruppe abgeleitet werden.

Nachteilig an den bekannten Sensoren zur Bestimmung der Position Glasbaugruppe in einem Außenrückspiegel ist es, daß deren Funktion durch Korrosion gestört werden kann. Sobald Wasser, insbesondere in Verbindung mit Salz, in den Außenspiegel eindringt, können die empfindlichen Widerstandsbahnen bzw. Schleifer der Memory-Potentiometer beschädigt werden und verursachen dadurch Ausfälle der Memory-Funktion.

Aufgabe der vorliegenden Erfindung ist es, einen Außenrückspiegel zu schaffen, bei dem die Position der Glasbaugruppe mit einem korrosionsunempfindlichen Sensor bestimmbar ist.

Diese Aufgabe wird durch einen Außenrückspiegel mit den Merkmalen des Anspruchs 1 gelöst. Bevorzugte Ausführungsformen der Erfindung sind Gegenstand der Unteransprüche.

Die Erfindung beruht auf dem Grundgedanken, zur Bestimmung der Position der Glasbaugruppe einen Sensor einzusetzen, der berührungslos arbeitet. Als besonders geeignetes Funktionsprinzip hat es sich dabei herausgestellt, die Änderung der Magnetfeldstärke in Abhängigkeit der Anordnung eines Meßpunktes in einem Magnetfeld zur bestimmungsgemäßen Messung der Position der Glasbaugruppe einzusetzen.

Erfindungsgemäß wird deshalb vorgeschlagen, den Sensor in der Art eines Magnetsensors auszubilden, der im Außenrückspiegel mit einem Magnetelement, d. h. einem Bauteil, das von einem Magnetfeld umgeben ist, beispielsweise einem Dauermagnet, in der Art zusammenwirkt, daß der Magnetsensor oder das Magnetelement an der Verstellbewegung der Glasbaugruppe teilnimmt, so daß im Ergebnis bei der Verstellung der Glasbaugruppe eine Relativbewegung zwischen Magnetsensor und Magnetelement entsteht. Im Ergebnis wird dadurch der Magnetsensor im Magnetfeld des Magnetelements bewegt und ist somit abhängig von der Position der Glasbaugruppe unterschiedlichen Feldstärken im Magnetfeld des Magnetelements ausgesetzt. Abhängig von der jeweiligen Feldstärke liefert der Magnetsensor ein veränderliches Ausgangssignal, wobei dem Ausgangssignal eine bestimmte Position der Glasbaugruppe zugeordnet ist, so daß durch Auswertung des Ausgangssignals in einer Auswerteeinheit die Position der Glasbaugruppe ableitbar ist. Damit steht ein zuverlässiger Sensor zur berührungslosen Messung der Position der Glasbaugruppe zur Verfügung. Grundsätzlich ist es für die Funktion der Erfindung ohne Belang, ob der Magnetsensor oder das Magnetelement an der Verstellbewegung der Glasbaugruppe teilnimmt. In vielen Fällen wird es zwar einfacher sein, den Magnetsensor feststehend und das Magnetelement beweglich anzuordnen, weshalb die weitere Beschreibung von dieser Art der Anordnung ausgeht. Die umgekehrte Anordnung ist jedoch ebenfalls problemlos realisierbar.

In welcher Bauart der Magnetsensor ausgebildet ist, ist grundsätzlich beliebig, solange ein mit der Änderung der Position im Magnetfeld des Magnetelements veränderliches Ausgangssignal generierbar ist. Denkbar ist beispielsweise der Einsatz von GMR-Sensoren, Feldplatten oder magnetoresistiven Sensoren. Besonders geeignet sind sogenannte Hallsensoren, da diese Art von Sensoren bereits zu günstigen Preisen zusammen mit entsprechend geeigneten Magnetelementen, beispielsweise durch Vakuumschmelze erhaltene Dauermagnete, im Handel verfügbar sind. Hallsensoren weisen dabei selbst bei geringen Stellbewegungsamplituden ein gutes Auflösungsvermögen auf.

Zur Auswertung des Ausgangssignals des Magnetsensors muß das Ausgangssignal an eine Auswerteeinheit, beispielsweise die Zentralrecheneinheit in einem Kraftfahrzeug, weitergeleitet werden. Um die Signalübertragung auch bei längeren Leiterwegen zuverlässig zu gewährleisten, ist es vorteilhaft, wenn das Ausgangssignal ein relativ hohes Spannungsniveau aufweist. Es ist deshalb vorteilhaft, wenn in den Magnetsensor eine Schaltung zur Signalverstärkung integriert ist, so daß die Ausgangssignale proportional angehoben werden können. Weiter ist es vorteilhaft, wenn der Magnetsensor eine Schaltung zur Temperaturkompensation aufweist, so daß das Meßergebnis nicht durch Temperatureinflüsse verfälscht wird.

Besonders vorteilhaft ist es, wenn der Magnetsensor mit einer Versorgungsspannung von ca. 5V DC versorgt werden kann, da diese Versorgungsspannung auch schon bisher für die Versorgung der bekannten Sensoren verwendet wurde, so daß eine Anpassung der Versorgungsspannung an die neuen Magnetsensoren nicht erforderlich ist. Jedoch ist grundsätzlich auch jede andere Versorgungsspannung denkbar, soweit sie im Fahrzeug zur Verfügung gestellt werden kann.

Weiterhin vorteilhaft ist es, wenn der Magnetsensor in Abhängigkeit von der Position des Magnetelements eine Ausgangsspannung im Spannungsbereich von 5 % bis 95 % der Versorgungsspannung abgibt, da dieser Spannungsbereich ebenfalls dem bisher verwendeten Spannungsbereich entspricht, so daß die bisher verwendeten Auswerteeinheiten im wesentlichen unverändert weiter verwendbar sind. Jedoch ist grundsätzlich auch jede anderer Spannungsbereich denkbar, soweit er eine ausreichende Genauigkeit der Meßsignale über den Stellbereich ermöglicht.

Prinzipiell ist zum Einsatz in dem erfindungsgemäßen Außenrückspiegel jedes Magnetelement denkbar, das ein Magnetfeld aufbaut. Beispielsweise können auch Magnetelemente eingesetzt werden, bei denen ein Magnetfeld durch den Fluß eines bestimmten elektrischen Stroms erzeugt wird. Besonders preisgünstig sind Magnetelemente, die in der Art von Dauermagneten ausgebildet sind. Dauermagneten sind auch deshalb besonders vorteilhaft, da sie nicht von außen mit Energie versorgt werden müssen und daher außerordentlich zuverlässig sind. Dabei sollten Dauermagneten eingesetzt werden, deren magnetische Eigenschaften sich innerhalb der durchschnittlichen Lebensdauer eines Kraftfahrzeuges jedenfalls nur geringfügig verändern.

Besonders geeignet zum Einsatz in den erfindungsgemäßen Außenrückspiegel sind Magnetelemente, die insgesamt eine stabförmige Geometrie aufweisen, wobei der Nord- bzw. Südpol des Magnetelements jeweils an einem Ende des Magnetstabes angeordnet ist.

Zur Erzeugung von Magnetfeldern mit bestimmten günstigen Eigenschaften ist es vorteilhaft, wenn das Magnetelement aus mehreren Magnetteilelementen zusammengesetzt ist. Durch gezielte Kombination verschiedener, die beispielsweise unterschiedliche magnetische Eigenschaften bzw. unterschiedliche Orientierungen aufweisen können, kann ein Magnetfeld erzeugt werden, das durch den Magnetsensor besonders gut ausgewertet werden kann. Diese Art der Zusammensetzung des Magnetelements aus mehreren Magnetteilelemente ist besonders bei kleineren Stückzahlen günstig, wenn die Herstellung eines einstückigen Megnetelements, dessen Eigenschaften für den speziellen Rückspiegel spezifiziert sind, wegen des Fixkostenanteils nicht lohnt. Bei der Fertigung in größeren Serien ist es jedoch selbstverständlich auch möglich, einen entsprechend spezifiziertes Magnetelement, beispielsweise einen Dauermagneten, aus einem Stück zu formen und gemäß der gewünschten Magneteigenschaften zu magnetiesieren.

Die Kombination von Magnetsensoren mit Magnetelementen zur Bestimmung einer relativen Lage von Magnetsensor zum Magnetelement kann in verschiedenen an sich bekannten Betriebsarten betrieben werden. So ist beispielsweise die Unipolar Head-On-Betriebsart bekannt, bei der der eine Pol eines Dauermagneten dem Magnetsensor frontal angenähert wird. Dabei verändert sich das Ausgangssignal des Magnetsensors allerdings nicht linear mit dem Abstand des Magnetpols vom Magnetsensor. Vielmehr nähert sich das Ausgangssignal mit zunehmendem Abstand des Magnetpols vom Magnetsensor asymptotisch dem Nullpunkt, so daß zumindest in diesem Meßbereich eine schlechte Auflösung der Stellbewegung bei dieser Betriebsart gegeben ist.

Weiter ist die Unipolar Slide-By-Betriebsart bekannt, bei der der eine Pol eines Dauermagneten dem Magnetsensor in einem bestimmten Abstand gegenüberliegt und bei der Stellbewegung parallel zum Magnetsensor in konstantem Abstand y am Magnetsensor vorbeigeführt wird. Bei dieser Betriebsart erreicht das Ausgangssignal ein Maximum, sobald der Dauermagnet dem Magnetsensor direkt gegenüberliegt. Im Stellbereich des Dauermagneten ausgehend von dieser Stellung mit maximalem Ausgangssignal verändert sich das Ausgangssignal nicht linear, sondern fällt unterproportional schwach ab. Daraus ergibt sich, daß im Stellbereich um das Maximum des Ausgangssignals auch bei dieser Betriebsart keine gute Auflösung der Stellbewegung möglich ist.

Besonderes geeignet für den erfindungsgemäßen Zweck ist die Bipolar Slide-By-Betriebsart. Bei dieser Betriebsart wird ein Magnetelement verwendet, das zumindest zwei Magnetabschnitte, beispielsweise zwei Magnetteilelemente, aufweist. Wie bei der Unipolar Slide-By-Betriebsart wird das Magnetelement in einem bestimmten Abstand y gegenüber dem Magnetsensor angeordnet und dann während der Messung mit konstantem Abstand y parallel zum Magnetsensor verfahren. Bei der Bipolar Slide-By-Betriebsart nimmt das Ausgangssignal den Referenzwert für die Nullstellung an, sobald das Magnetelement dem Magnetsensor mit dem kürzestmöglichen Abstand gegenüberliegt. Ausgehend von diesem Punkt steigt das Ausgangssignal in die eine Richtung linear an bzw. fällt in die Gegenrichtung linear ab. Die Steigung des linearen Meßsignalbereichs kann dabei durch den Abstand zwischen den beiden Abschnitten des Magnetelements mit umgekehrter Polung beeinflußt werden. Je größer der Abstand zwischen den beiden Abschnitten ist, desto geringer ist die Steigung des Meßsignals im linearen Meßbereich.

Bei der Verwendung eines Magnetsensors mit zugehörigem Magnetelement in der Bipolar Slide-By-Betriebsart wird der Meßbereich des Magnetsensors gerade so gewählt, daß die zu messende Stellbewegung der Glasbaugruppe gerade in den linearen Bereich des Ausgangssignalverlaufs hineinfällt. Dadurch wird erreicht, daß die Stellbewegung über den gesamten Stellbereich hinweg mit der im wesentlichen gleichen Auflösung abgebildet werden kann.

Grundsätzlich ist es gleichgültig, ob der Magnetsensor oder das Magnetelement an der Verstellbewegung der Glasbaugruppe teilnimmt, da es zur Bestimmung der Position der Glasbaugruppe ohne Belang ist, ob sich der Magnetsensor relativ zum Magnetelement oder das Magnetelement relativ zum Magnetsensor bewegt. Allerdings ist es vorteilhaft, wenn der Magnetsensor feststehend auf einem Grundkörper des Außenrückspiegels, beispielsweise einer Verstärkerplatte, angeordnet ist und das Magnetelement an der Verstellbewegung der Glasbaugruppe teilnimmt. Wird nämlich der Außenrückspiegel durch äußere Einwirkungen beschädigt, beispielsweise durch einen Unfall, sind in den meisten Fällen nur die Glasbaugruppe und der Verstellantrieb so schwer beschädigt, daß sie ausgetauscht werden müssen. Somit kann durch die feststehende Anordnung des Magnetsensors in den meisten Fällen vermieden werden, daß der Magnetsensor nach einer Beschädigung des Außenrückspiegels ausgetauscht werden muß. Zwar wird in den meisten Fällen dafür das Magnetelement zu erneuern sein, was jedoch wegen der geringeren Bauteilkosten für das Magnetelement und dem geringeren Aufwand zur Montage, insbesondere bei Dauermagneten, die nicht verkabelt werden müssen, erheblich geringere Kosten verursacht.

Wird die Kombination aus Magnetsensor und Magnetelement in der Bipolar Slide-By-Betriebsart betrieben, ist es wie beschrieben erforderlich, daß das Magnetelement mit im wesentlichen konstanten Abstand parallel zum Magnetsensor verfahren wird. Bei der feststehenden Anordnung des Magnetsensors auf einem Grundkörper ist es deshalb vorteilhaft, wenn der Grundkörper im Bereich der Magnetsensoren Vertiefungen oder Ausnehmungen aufweist, in die das Magnetelement in Abhängigkeit von der Position der Glasbaugruppe mit unterschiedlicher Tiefe eindringen kann. Ist der Magnetsensor auf einer Leiterplatte oder ähnlichem angeordnet, die ihrerseits auf dem Grundkörper befestigt ist, muß auch die Leiterplatte entsprechend angeordnete Ausnehmungen aufweisen, so daß sie von den Magnetelementen durchgriffen werden kann. Mit anderen Worten bedeutet dies, daß der Magnetsensor in einer bestimmten Höhe auf oder im Grundkörper angeordnet werden kann und das Magnetelement durch die Vertiefung bzw. Ausnehmung im Grundkörper genügend Spielraum erhält, um über den ganzen Stellbereich parallel zum Magnetsensor verfahren zu werden. Außerdem kann durch die Geometrie der Vertiefung bzw. Ausnehmung eine Führung des Magnetelements relativ zum Magnetsensor erreicht werden. Dies ist beispielsweise dadurch möglich, daß die Ausnehmung einen lediglich geringfügig größeren Durchmesser aufweist als das Magnetelement.

Insbesondere um Betrieb des Magnetsensors in der Bipolar Slide-By-Betriebsart muß das Magnetelement in der Art angeordnet sein, daß es bei der Verstellbewegung der Glasbaugruppe mit im wesentlichen konstanten Abstand y parallel zum Magnetsensor verfahren werden kann.

Um das erfindungsgemäße Meßsystem auf einem möglichst kleinen Bauraum unterbringen zu können, ist es vorteilhaft, wenn das Magnetelement in den Verstellantrieb integriert wird.

Dabei ist es besonders vorteilhaft in den Fällen, in denen der Verstellantrieb ein Getriebeelement, insbesondere eine Zahnstange oder einen Schneckenstössel aufweist, durch das eine Stellbewegung auf die Glasbaugruppe übertragbar ist, das Magnetelement so zu gestalten bzw. anzuordnen, daß es an der Stellbewegung des Getriebeelements teilnimmt. Bei jeder von dem Getriebeelement übertragenen Stellbewegung wird das Magnetelement mitgenommen, so daß dadurch indirekt die Verstellung der Glasbaugruppe gemessen werden kann. Jeder Position des Getriebeelements ist dabei in der Regel eindeutig eine Position der Glasbaugruppe zugeordnet.

Zur Verwirklichung dieses Funktionsprinzips ist es beispielsweise denkbar, das Magnetelement am Ende des Getriebeelements, insbesondere am Ende einer Zahnstange oder am Ende eines Schneckenstössels, zu befestigen. Dadurch wird es mit einfachen Mitteln möglich, bereits in Serie verwendete Verstellantriebe durch einfaches Hinzufügen des Magnetelements an das vorhanden Getriebeelement zur Verwendung für das erfindungsgemäße Sensorsystem zu verwenden.

Werden Dauermagneten aus metallischen Werkstoffen, beispielsweise Eisen, als Magnetelement verwendet, ist es erforderlich, die Korrosion des Dauermagneten langfristig auszuschließen, da die magnetischen Eigenschaften des Magnetelements durch Korrosion verändert würden, so daß eine sichere Funktion des erfindungsgemäßen Sensorsystems nicht unter allen Umständen gewährleistet wäre. Besonders günstig kann der Korrosionsschutz des Magnetelements gewährleistet werden, wenn zur Herstellung des Getriebeelements, das im Verstellantrieb zur Übertragung einer Stellbewegung auf die Glasbaugruppe verwendet wird, ein Magnetelement, vorzugsweise ein Dauermagnet, mit Kunststoff umspritzt wird.

Durch diese Maßnahme wird ein zuverlässiger Korrosionsschutz des Magnetelements gewährleistet, da die gesamt Oberfläche des Magnetelements mit Kunststoff ummantelt ist. Außerdem kann der Platzbedarf des Magnetelements im wesentlichen eliminiert werden, da es vollständig in das sowieso vorzusehende Getriebeelement integriert wird. Verfahrenstechnisch können derartige Getriebeelemente mit eingebettetem Magnetelement beispielsweise durch Insert-Moulding hergestellt werden. Im Ergebnis wird man ein multifunktionales Teil erhalten, das gleichzeitig als Magnetelement und als Getriebeelement einsetzbar ist.

Eine noch vorteilhaftere Möglichkeit zur Herstellung eines Getriebeelements mit integriertem Magnetelement ist es, wenn das Getriebeelement unter Verwendung eines magnetisierbaren Werkstoffs urgeformt wird. Beispielsweise kann das Getriebeelement aus einem magnetisierbaren metallischen Werkstoff druckgegossen werden. Noch vorteilhafter ist es allerdings, wenn das Getriebeelement unter Verwendung eines Kunststoffes, der ein kunststoffgebundenes Magnetmaterial enthält, durch Spritzgießen hergestellt ist. Im Ergebnis wird dadurch ein Getriebeelement aus Kunststoff mit den bekannten Vorteilen von Kunststoff, wie beispielsweise geringem Gewicht und hoher Verschleißfestigkeit, erhalten, das zugleich durch den enthaltenen Magnetwerkstoff, z. B. Neodym-Eisen-Bor so magnetisierbar ist, daß es als dauermagnetisches Magnetelement einsetzbar ist. Da derartige Materialien durch Spritzguß verarbeitbar sind, lassen sie sich auch kostengünstig herstellen. Nach der Formgebung , beispielsweise durch Spritzguß, werden die fertigen Getriebeelemente definiert magnetisiert.

In manchen Fällen werden von dem Getriebeelement, beispielsweise einer Zahnstange oder einem Schneckenstössel, erhebliche Anforderungen im bezug auf die mechanische Festigkeit und Verschleißfestigkeit gefordert. Diese Anforderungen können mit Kunststoffen, die kunstoffgebundene Magnetmaterialien enthalten, teilweise nur schwer erfüllt werden. Es ist deshalb vorteilhaft, wenn das Getriebeelement in einem Mehrkomponentenspritzgießverfahren hergestellt wird, bei dem ein Kunststoff, der ein kunststoffgebundenes Magnetmaterial enthält, mit einem anderen Kunststoff umspritzt wird. Dadurch wird es möglich, den Kern des Getriebeelements aus magenetisierbarem Material herzustellen, wohingegen die äußeren Bereiche des Getriebeelements aus einem hochbelastbaren bzw. verschleißfesten Kunststoff hergestellt werden können.

Zur Kontaktierung des Magnetsensors ist es vorteilhaft, wenn Leiterbahnen eingesetzt werden, die mit Kunststoff umspritzt sind, wie es beispielsweise in der DE 198 41 551 beschrieben ist. Die elektrischen Leitungen, mit denen die Magnetsensoren kontaktiert werden, können beispielsweise durch Insert-Moulding in einer Verstärkerplatte vorgesehen werden. Es ist auch denkbar, die Leiterbahnen als Stanzgitter oder Lead Frame auszubilden, auf dem der Magnetsensor kontaktiert und anschließend zusammen mit dem Stanzgitter mit Kunststoff umspritzt wird. Auch die Verwendung von Mehrkomponentenspritzgießverfahren zur Herstellung der Verstärkerplatte mit Teilmetallisierungen von Kunststoffkomponenten zur Erzeugung von Leiterbahnen oder Folienleiterplatten, starre Leiterplatten oder konventionelle Rundleitungen sind denkbar.

Da mit dem erfindungsgemäßen Sensorsystem die Positionsmessung berührungslos erfolgt, kann der Magnetsensor zum Schutz vor Korrosion mit Kunststoff umspritzt oder in eine Dichtmasse, insbesondere Silikon, eingegossen werden. Alternativ dazu kann der Magnetsensor zum Schutz vor Korrosion in einem abdichtbaren Trockenraum des Außenrückspiegels, wie er beispielsweise in der DE 199 28 384 beschrieben ist, angeordnet werden.

Für die Anwendung des erfindungsgemäßen Meßprinzips in den meisten Außenrückspiegeln ist es erforderlich, zwei Magnetsensoren und zwei dazu funktionskomplementär angeordnete Magnetelemente vorzusehen. Dabei wird mit jeweils einer Kombination aus Magnetsensor und Magnetelement die Winkelposition der Glasbaugruppe gegenüber jeweils einer Schwenkachse gemessen.

Nachfolgend wird die Erfindung anhand lediglich eine bevorzugte Ausführungsform darstellender Zeichnungen näher erläutert. Es zeigt:
- **Fig. 1**: Teile eines Außenrückspiegels in perspektivischer Ansicht;
- **Fig. 2**: das Zusammenwirken eines Magnetsensors und eines Magnetelements in einem Außenrückspiegel gemäß **Fig. 1** in perspektivischer Ansicht;
- **Fig. 3**: vier Betriebsarten von Magnetsensorsystemen;
- **Fig. 4**: die magnetische Flußdichte eines Magnetelements in Abhängigkeit der Magnetposition relativ zu einem Referenzpunkt.

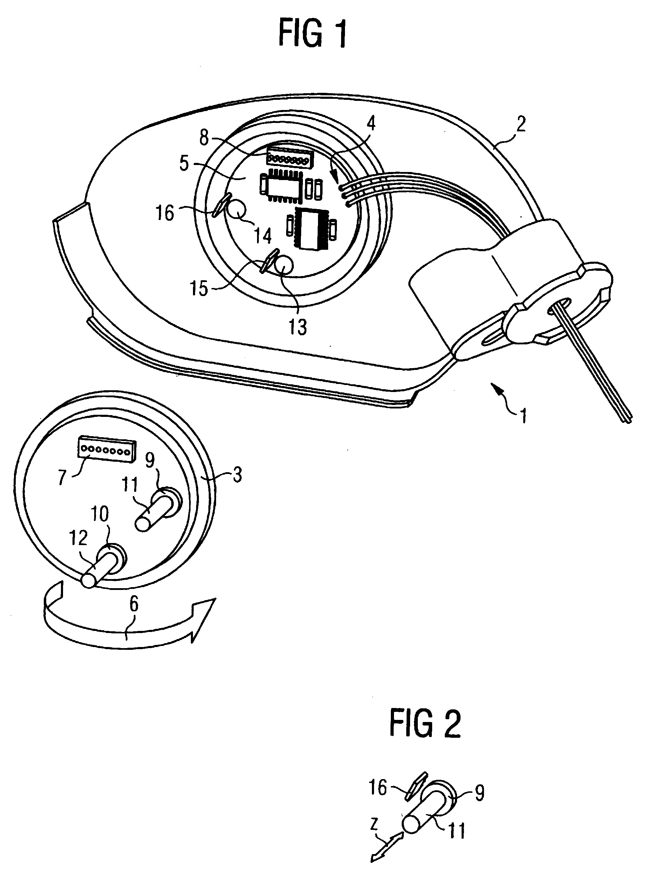

**Fig. 1** zeigt einen Außenrückspiegel 1 mit einer Trägerplatte 2 und einem Verstellantrieb 3. Die Bauteile des Außenrückspiegels 1, die für das Verständnis der Erfindung ohne Belang sind, sind in **Fig. 1** nicht dargestellt.

Auf der Trägerplatte 2 ist ein Trockenraum 4 vorgesehen, der durch die deckelartige Anbringung des Verstellantriebs 3 auf der offenen Seite des Trockenraums 4 wasserdicht abgedichtet werden kann. Im Trockenraum 4 ist eine Leiterplatte 5 vorgesehen, auf der verschiedene elektronische Bauteile bestückt sind.

In **Fig. 1** ist nur die Rückseite des Verstellantriebs 3 erkennbar. Zur Montage des Verstellantriebs 3 auf der Trägerplatte 2 wird der Verstellantrieb 3 entsprechend dem Bewegungspfeil 6 gewendet, so daß die Steckerleiste 7 mit der funktionskomplementär ausgebildeten Steckerleiste 8 in Eingriff gebracht werden kann, und anschließend befestigt.

Auf der in **Fig. 1** nicht dargestellten Vorderseite des Verstellantriebs 3 sind zwei Stellmotoren angeordnet, die, wie aus dem Stand der Technik bekannt, über zwei Zahnstangen 9 und 10, von denen in **Fig. 1** lediglich das von der Glasbaugruppe abgewandte Ende erkennbar ist, eine nicht dargestellte Glasbaugruppe in zwei Stellebenen antreiben können.

Am von der Glasbaugruppe abgewandten Ende der Zahnstangen 9 und 10 ist jeweils ein stabförmig ausgebildetes, dauermagnetisches Magnetelement 11 und 12 befestigt. Die Magnetelemente 11 und 12 nehmen somit an den Stellbewegungen der Zahnstangen 9 und 10 bei der Verstellung der nicht dargestellten Glasbaugruppe teil. In der Leiterplatte 5 und der darunterliegenden Trägerplatte 2 sind zwei Ausnehmungen 13 und 14 (Leiterplatte 5) bzw. zwei nicht dargestellte Vertiefungen (Trägerplatte 2) vorgesehen, so daß die Magnetelemente 11 und 12 bei der Verstellung der Glasbaugruppe widerstandsfrei und durch den Rand der Ausnehmungen 13 und 14 geführt in die Trägerplatte 2 eintauchen können. Am Rand der Ausnehmungen 13 und 14 ist jeweils ein Magnetsensor 15 und 16 vorgesehen, die über die Leiterplatte 5 mit einer Auswerteeinheit 17 kontaktiert sind. Die Anordnung der Magnetelemente 11 und 12 bzw. der Magnetsensoren 15 und 16 erlaubt es, die Position der Glasbaugruppe bezüglich der beiden vorgesehenen Schwenkachsen durch Betrieb der Magnetsensoren in der Bipolar Slide-By-Betriebsart zu bestimmen.

**Fig. 2** zeigt die relative Anordnung des Magnetelements 11 zum in der Art eines Hallsensors ausgebildeten Magnetsensors 16 nach Montage des Verstellantriebs 3. Man erkennt, daß das Magnetelement 11 bei der linearen Stellbewegung der Zahnstange 9 in Z-Richtung mit konstantem Abstand zum Magnetsensor 16 parallel zu diesem verfahren wird.

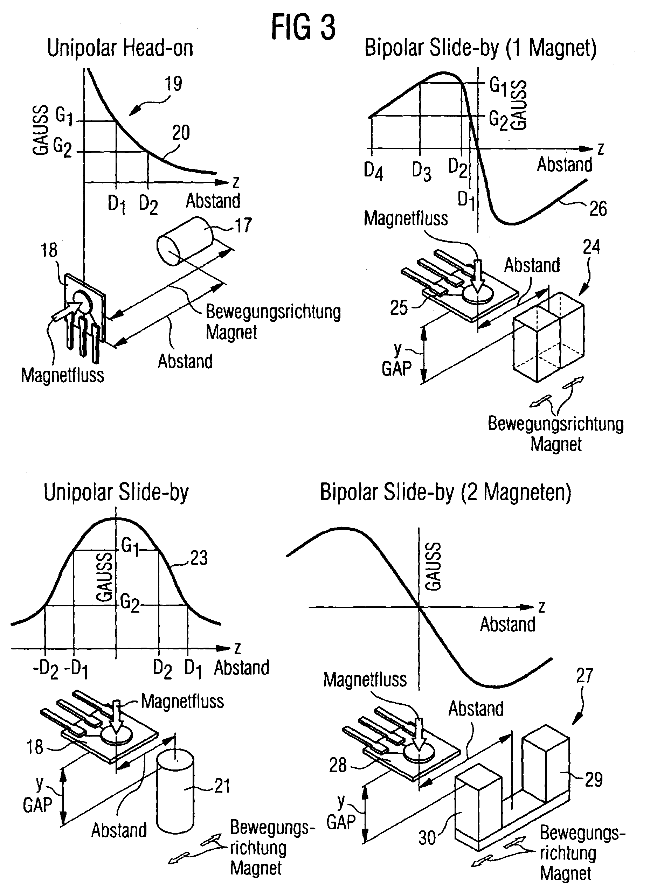

**Fig. 3** zeigt vier Betriebsarten einer Kombination eines Magnetelements mit einem Magnetsensor, wobei als Eingangsgröße die relative Lage zwischen Magnetelement und Magnetsensor und als Ausgangssignal eine Ausgangsspannung des Magnetsensors gegeben ist. Die Zeichnung ganz links zeigt die Unipolar Head-On-Betriebsart, bei der das Magnetelement 17 frontal an den Magnetsensor 18 angenähert wird. Das Diagramm 19 zeigt den Verlauf des Ausgangssignals 20 über den auf der Z-Achse angetragenen Abstand zwischen Magnetsensor 18 und Magnetelement 17. Man erkennt, daß sich das Ausgangssignal 20 in zunehmendem Abstand zwischen Magnetelement 17 und Magnetsensor 18 asymptotisch dem Nullwert nähert, so daß Stellbewegungen in diesem Bereich nur noch unzureichend aufgelöst werden können.

Das 3. Bild von links in **Fig. 3** zeigt die Kombination eines Magnetelements 21 mit einem Magnetsensor 22 in der Unipolar Slide-By-Betriebsart. In dieser Betriebsart wird das Magnetelement 21 im konstanten Abstand y parallel an dem Magnetsensor vorbeigeführt. Dabei steigt mit der Annäherung des Magnetelements 21 an den Magnetsensor das Ausgangssingal 23 des Magnetsensors kurvenförmig an und erreicht ein Maximum, sobald das Magnetelement 21 sich dem Magnetsensor 22 mit minimalem Entfernung gegenübersteht. Ausgehend von dem Maximum des Ausgangssignals fällt das Ausgangssignal bei weiterer Verschiebung des Magnetelements 21 wiederum ab. Man erkennt, daß die Kurve des Ausgangssignals 23 im Bereich des Maximums nur eine sehr geringe Steigung aufweist, weshalb Bewegungen durch die Kombination des Magnetelements 21 mit dem Magnetsensor 22 in der Unipolar Slide-By-Betriebsart im Bereich des Ausgangssignalmaximums nur schlecht aufgelöst werden können.

Das zweite Bild von links in **Fig. 3** zeigt die Kombination eines Magnetelements 24 mit einem Magnetsensor 25 in einer Bipolar Slide-By-Betriebsart. Man erkennt, daß das Magnetelement 24 zwei Abschnitte aufweist, deren magnetische Polung entgegengesetzt ausgebildet ist. Im Ergebnis liegt somit dem Magnetsensor 25 sowohl ein Süd- als auch ein Nordpol des Magnetelements 24 gegenüber. Zur Messung von Bewegungen wird das Magnetelement 24 in konstantem Abstand y parallel zum Magnetsensor 25 an dem Magnetsensor 25 vorbeigeführt. Dabei ergibt sich eine Ausgangssignalkurve 26. Das Ausgangssignal 26 weist um den Nullpunkt herum, der erreicht wird, wenn das Magnetelement 24 den Magnetsensor 25 direkt gegenüberliegt, eine lineare Steigung auf. Ab einem gewissen Abstand des Magnetelements 24 zum Magnetsensor 25 fällt die Steigung der Ausgangskurve 26 ab und erreicht ein absolutes Maximum bzw. ein absolutes Minimum. Für die Messung der Position der Glasbaugruppe durch die Verwendung einer Kombination eines Magnetsensors mit einem Magnetelement ist somit die Biploar Slide-By-Betriebsart besonders gut geeignet, da Bewegungen, die zu Abstandsänderungen zwischen dem Magnetelement 24 und dem Magnetsensor 25 führen, im Bereich zwischen dem absolutem Minimum und dem absoluten Maximum aufgrund der gleichmäßigen Steigung gleichmäßigen gut aufgelöst werden können. Bei der Auslegung des Magnetsensors ist dabei zu beachten, daß es vorteilhaft ist, wenn bei maximaler Auslenkung des der Glasbaugruppe in der einen bzw. der entgegengesetzten Richtung noch ein ausreichender Abstand des Ausgangssignals des Magnetsensors zum absoluten Maximal bzw. absoluten Minimal gewährleistet ist.

Das 4. Bild von links in **Fig. 3** zeigt die Kombination eines Magnetelements 27 mit einem Magnetsensor 28 in der Bipolar Slide-By-Betrtiebsart, wobei das Magnetelement 27 zwei separate Magnete 29 und 30 aufweist, die einen bestimmten Abstand zueinander aufweisen und entgegengesetzt gepolt sind. Das Ausgangssignal 31 des Magnetsensors 28 in dieser Betriebsart entspricht qualitativ dem Ausgangssignalverlauf des Ausgangssignals 26. Man erkennt, daß durch Variation des Abstands zwischen den Magnetteilelementen 29 und 30 die Steigung der Ausgangssignalkurve variiert werden kann.

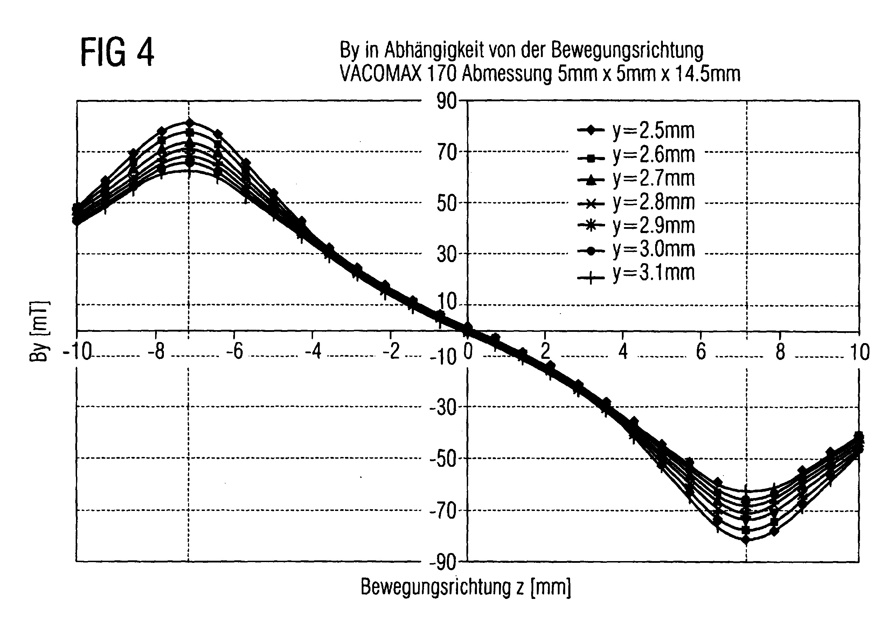

**Fig. 4** zeigt die magnetische Flußdichte in [mT] eines Magnetelements in Abhängigkeit der Magnetposition relativ zu einem Referenzpunkt bei Bewegung des Magnetelements in Bewegungsrichtung z in [mm]. Es sind dabei in **Fig. 4** sieben Kurven der magnetische Flußdichte für unterschiedliche Abstände y in [mm] angetragen. Man erkennt, daß sich die magnetische Flußdichte bei der Bewegung des Magnetelements im Bereich des Nullpunktes beinahe linear mit dem Wert von z verändert. Außerdem zeigt das Diagramm, daß sich die magnetische Flußdichte im Bereich um den Nullpunkt herum nur geringfügig mit der Variation des Abstands y verändert.

## Patentansprüche

1. Außenrückspiegel für ein Kraftfahrzeug mit einer verstellbar gelagerten Glasbaugruppe und einem elektrischen Verstellantrieb zur fernsteuerbaren Verstellung der Glasbaugruppe, wobei die Position der Glasbaugruppe, insbesondere die Winkelstellung, mit zumindest einem Sensor bestimmbar ist,
dadurch **gekennzeichnet**,
daß der Sensor in der Art eines Magnetsensors (15, 16) ausgebildet ist, der mit einem im Außenrückspiegel (1) vorgesehenen Magnetelement (11, 12) in der Art zusammenwirkt, daß der Magnetsensor (15, 16) oder das Magnetelement (11, 12) an der Verstellbewegung der Glasbaugruppe teilnimmt und der Magnetsensor (15, 16) in Abhängigkeit von der Position des Magnetelements (11, 12) ein veränderliches Ausgangssignal liefert, aus dem in einer Auswerteeinheit die Position der Glasbaugruppe ableitbar ist.

2. Außenrückspiegel nach Anspruch 1,
dadurch **gekennzeichnet**,
daß der Magnetsensor (15, 16) in der Art eines Hallsensors ausgebildet ist.

3. Außenrückspiegel nach Anspruch 1 oder 2,
dadurch **gekennzeichnet**,
daß der Magnetsensor eine Schaltung zur Signalverstärkung und/oder Temperaturkompensation aufweist.

4. Außenrückspiegel nach einem der Ansprüche 1 bis 3,
dadurch **gekennzeichnet**,
daß der Magnetsensor mit einer Versorgungsspannung von circa 5V DC versorgt wird.

5. Außenrückspiegel nach einem der Ansprüche 1 bis 4,
dadurch **gekennzeichnet**,
daß der Magnetsensor in Abhängigkeit von der Position des Magnetelements eine Ausgangsspannung im Spannungsbereich von 5% bis 95% der Versorgungsspannung abgibt.

6. Außenrückspiegel nach einem der Ansprüche 1 bis 5,
dadurch **gekennzeichnet**,
daß das Magnetelement (11, 12) in der Art eines Dauermagneten ausgebildet ist.

7. Außenrückspiegel nach einem der Ansprüche 1 bis 6,
dadurch **gekennzeichnet**,
daß das Magnetelement (11, 12) eine insgesamt stabförmige Geometrie aufweist.

8. Außenrückspiegel nach einem der Ansprüche 1 bis 7,
dadurch **gekennzeichnet**,
daß das Magnetelement (27) aus mehreren Magnetteilelementen (29, 30) zusammengesetzt ist.

9. Außenrückspiegel nach einem der Ansprüche 1 bis 8,
dadurch **gekennzeichnet**,
daß der Magnetsensor (25, 28) und das Magnetelement (24, 27) in der Art ausgebildet und angeordnet sind, daß die Position des Magnetelements (24, 27) relativ zum Magnetsensor (25, 28) in der Betriebsart "Bipolar Slide-by" bestimmbar ist.

10. Außenrückspiegel nach einem der Ansprüche 1 bis 9,
dadurch **gekennzeichnet**,
daß der Magnetsensor (15, 16) feststehend auf einem Grundkörper (2) des Außenrückspiegels (1) angeordnet ist und das Magnetelement (11, 12) an der Verstellbewegung der Glasbaugruppe teilnimmt.

11. Außenrückspiegel nach Anspruch 10,
dadurch **gekennzeichnet**,
daß der Grundkörper (2) im Bereich des Magnetsensors (15, 16) Vertiefungen oder Ausnehmungen (13, 14) aufweist, in die das Magnetelement (11, 12) in Abhängigkeit von der Position der Glasbaugruppe mit unterschiedlicher Tiefe eindringen kann.

12. Außenrückspiegel nach einem der Ansprüche 1 bis 11,
dadurch **gekennzeichnet**,
daß das Magnetelement (11, 12) in der Art angeordnet ist, daß es bei der Verstellbewegung der Glasbaugruppe mit im wesentlichen konstanten Abstand parallel zum Magnetsensor (15, 16) verfahren wird.

13. Außenrückspiegel nach einem der Ansprüche 1 bis 12,
dadurch **gekennzeichnet**,
daß das Magnetelement (11, 12) in den Verstellantrieb (3) integriert ist.

14. Außenrückspiegel nach Anspruch 13,
dadurch **gekennzeichnet**,
daß der Verstellantrieb (3) ein Getriebeelement, insbesondere eine Zahnstange (9, 10) oder einen Schneckenstößel, aufweist, durch das eine Stellbewegung auf die Glasbaugruppe übertragbar ist, wobei das Magnetelement (11, 12) an der Stellbewegung des Getriebeelements teilnimmt.

15. Außenrückspiegel nach Anspruch 14,
dadurch **gekennzeichnet**,
daß das Magnetelement (11, 12) am Ende des Getriebeelements, insbesondere am Ende einer Zahnstange (9, 10) oder am Ende eines Schneckenstößels, befestigt ist.

16. Außenrückspiegel nach Anspruch 14,
dadurch **gekennzeichnet**,
daß zur Herstellung des Getriebeelements ein Magnetelement mit Kunststoff umspritzt wird.

17. Außenrückspiegel nach Anspruch 14,
dadurch **gekennzeichnet**,
daß das Getriebeelement unter Verwendung eines magnetisierbaren Werkstoffs urgeformt wird.

18. Außenrückspiegel nach Anspruch 17,
dadurch **gekennzeichnet**,
daß das Getriebeelement unter Verwendung eines Kunststoffs, der ein kunststoffgebundenes Magnetmaterial enthält, durch Spritzgießen hergestellt ist.

19. Außenrückspiegel nach Anspruch 18,
dadurch **gekennzeichnet**,
daß das Getriebeelement in einen Mehrkomponentenspritzgießverfahren hergestellt ist, bei dem ein Kunststoff, der ein kunststoffgebundenes Magnetmaterial enthält, mit einem anderen Kunststoff umspritzt wird.

20. Außenrückspiegel nach einem der Ansprüche 1 bis 19,
dadurch **gekennzeichnet**,
daß der Magnetsensor mittels zumindest einer Leiterbahnen kontaktierbar ist, die mit Kunststoff umspritzt ist.

21. Außenrückspiegel nach einem der Ansprüche 1 bis 20,
dadurch **gekennzeichnet**,
daß der Magnetsensor mit Kunststoff umspritzt ist.

22. Außenrückspiegel nach einem der Ansprüche 1 bis 21,
dadurch **gekennzeichnet**,
daß der Magnetsensor in eine Dichtmasse, insbesondere Silikon, eingegossen ist.

23. Außenrückspiegel nach einem der Ansprüche 1 bis 22,
dadurch **gekennzeichnet**,
daß der Magnetsensor (15, 16) in einem abdichtbaren Trockenraum (4) des Außenrückspiegels angeordnet ist.

24. Außenrückspiegel nach einem der Ansprüche 1 bis 23,
dadurch **gekennzeichnet**,
daß der Außenrückspiegel (1) zwei Magnetsensoren (15, 16) und zwei funktionskomplementär angeordnete Magnetelemente (11, 12) aufweist, so daß die Winkelposition der Glasbaugruppe gegenüber einer X-Achse und einer dazu nicht parallel verlaufenden Y-Achse bestimmbar ist.
